Europäisches Patentamt

European Patent Office

Office européen des brevets

(19)

(11) Publication number: **0 072 075**
**B1**

(12) **EUROPEAN PATENT SPECIFICATION**

(45) Date of publication of patent specification: **11.01.89**

(51) Int. Cl.⁴: **C 08 F 10/02, C 08 F 4/62**

(21) Application number: **82200989.0**

(22) Date of filing: **05.08.82**

(54) Process for preparing a polymerization catalyst and preparation of ethylene polymers with this catalyst.

(30) Priority: **06.08.81 NL 8103702**

(43) Date of publication of application:
**16.02.83 Bulletin 83/07**

(45) Publication of the grant of the patent:
**11.01.89 Bulletin 89/02**

(84) Designated Contracting States:
**AT BE DE FR GB IT NL SE**

(56) References cited:
**EP-A-0 039 971**
**GB-A-1 433 052**
**GB-A-1 575 352**
**US-A-3 635 840**

(73) Proprietor: **STAMICARBON B.V.**
**Mijnweg 1**
**NL-6167 AC Geleen (NL)**

(72) Inventor: **van de Leemput, Lambertus J. M.**
**Augustinus**
**Imkerstraat 16**
**NL-6101 GW Echt (NL)**
Inventor: **Nooijen, Godefridus Arnoldus H.**
**Gouv. Houbenstraat 16**
**NL-5981 BL Helden-Panningen (NL)**

Courier Press, Leamington Spa, England.

EP 0 072 075 B1

## Description

The invention relates to a process for preparing a chromium-containing catalyst for the polymerization of olefins by applying to an inert inorganic support a complex of a chromium compound with one or more organometallic compounds of a metal of group II or III of the periodic system in which hydrocarbyl groups with 1—20 carbon atoms are bonded to this metal.

The invention also relates to the polymerization with such a catalyst of a 1-alkene with 2—8 carbon atoms, in particular ethylene, whether or not together with minor amounts of at most 15 mole % of one or more 1-alkenes with 2—15 carbon atoms.

Similar processes are known from Dutch Patent Application 7605535.

Polymerization of olefins, in particular of ethylene with supported chromium oxide type catalysts, have been known for a long time. Such polymerization can be carried out as 'solution processes', yielding polymer as a solution in the solvent used for the polymerization. Such a polymerization is described in US Patent Specification 2,825,721. The polymerization of ethylene with a supported chromiumoxide type catalyst can also be carried out as a 'suspension process', in which the ethylene polymer is precipitated and is obtained as a suspension. Such a process is described in US Patent Specifications 2,825,721 and 3,087,917. Solution polymerizations are carried out at temperatures of at least 120°C, whereas suspension polymerizations are carried out at temperatures of about 110°C at most.

The suspension polymerizations mostly yield ethylene polymers with very low melt indices, i.e. high molecular weights. The molecular weight is higher as the polymerization temperature is lower. Thus, there are many catalysts of the supported chromium oxide type which are very suitable for application in a solution process at temperatures of, for example, 140°C or higher, but which in a suspension process yield high-molecular polymer only. It has been known for a long time that the molecular weight can be reduced with molecular weight control agents. The most commonly used molecular weight control agent is hydrogen. Many supported chromium oxide type catalysts, however, show only little sensitivity to hydrogen. In a suspension process large quantities of hydrogen must then be added to the monomer in order to obtain desired molecular weights. This strongly reduces the effectiveness of the catalyst. Lower yields are obtained and, moreover, large quantities of hydrogen must be recycled with small quantities of monomer. Economically, such methods are very unattractive, and technically they are often hardly feasible. On the other hand, a suspension process has advantages over a solution process, and that is why there is a need for catalysts with which, in a suspension process, ethylene polymers with lower molecular weights are prepared, and which are sensitive to temperature and to hydrogen. The fact is that there are wide differences as to the degree of variation of the molecular weight with the polymerization temperature. With many catalysts the molecular weight shows only little variation with temperature. With some, catalysts the temperature influence is much stronger, and with these catalysts the molecular weight can already be considerably influenced through the choice of the polymerization temperature. In using these catalysts it is desirable that limited quantities of hydrogen can bring about a distinct reduction in molecular weight.

Efforts are now generally being made to find possibilities of influencing, by modification of supported chromium oxide type catalysts, the molecular weights of ethylene polymers to be prepared with these catalysts. Thus, UK Patent Specification No. 1,231,322 and US Patent Specifications Nos. 3,812,058; 3,862,104; 3,900,457 and 3,974,101 state that the melt index of ethylene polymers is a function of the method of preparation of the silica support and of the activation by heating of supported chromium oxide, so that, by a suitable choice, polyethylene with higher melt indices can be prepared in a suspension process.

Applicant's non-prepublished Dutch Patent Application No. 80 02599 states that a catalyst can be obtained which can used for solution polymerization as well as for suspension polymerization, by reacting a chromium-1,3-diketo compound and a vanadium chelate or vanadylchelate of a 1,3-diketo compound, separately or jointly, with an organometallic compound of a metal of group II or III of the periodic system in which hydrocarbyl groups with 1—20 carbon atoms are bonded to the metal through a carbon atom, contacting the reaction products with and depositing them on an inert inorganic support, in particular silica, and heating the support with the organometallic complexes of chromium and vanadium diketo compounds deposited on it in a non-reducing atmosphere at a temperature of 200°C to 1200°C.

US Patent Specification No. 3,635,840 describes catalysts obtained by combining supported chromium oxide type with an organometallic compound and a vanadium-chelate or vanadylchelate of a 1,3-diketone, and next heating the resulting product in an oxygen-containing gas at temperatures of 260 to 816°C. According to the example, vanadium acetyl acetonate is combined with triethyl aluminium, and a chromium oxide catalyst is impregnated therewith and then heated at 566°C. Ethylene is polymerized with this catalyst in cyclohexane at 145°C and 148.3°C. Polyethylene with a melt index of 0.17 and 0.18, respectively, is then obtained.

It has been found that with the catalysts of Dutch Patent Application No. 80 02599, ethylene can be polymerized at about 100°C, under otherwise equal conditions, to a polyethylene with a melt index of about 0.2. In addition, the temperature sensitivity of such catalysts proves to be considerably greater.

With the catalyst according to US Patent Specification No. 3,635,840, a difference in temperature of 3.3°C will bring about a change in melt index of no more than 0.01. With the catalyst according to Dutch Patent Application No. 80 02594, the melt index can easily be varied to a considerable degree by small variations in temperature. In addition, these catalysts also have a good hydrogen sensitivity, i.e. addition of limited quantities of hydrogen brings about a substantial reduction of the molecular weight.

It has now been found that such catalysts or catalyst components can be prepared more simply by bringing a complex of a chromium compound and one or more organometallic compounds of a metal of group II or III of the periodic system, in which hydrocarbyl groups with 1—20 carbon atoms are bonded to this metal, on an inorganic support, wherein besides the chromium complex also a vanadium compound or a complex of a vanadium compound with one or more organometallic compounds of a metal of group II or III of the periodic system is deposited on the inert support in such an amount that 0,5—20 moles of the organometallic compound(s) per mole of chromium + vanadium are present, provided that in case a complex of vanadium compound/organometallic compound is used, only the chromium or only the vanadium compound is a 1,3-diketo compound.

The chromium compound is reacted with organometallic compounds of a metal of group II or III of the periodic system, such as beryllium, magnesium, boron, aluminium or gallium. The hydrocarbyl groups in these compounds are preferably alkyl groups with 1—20 carbon atoms.

Suitable chromium compounds are, for example, 1,3-diketo compounds such as chromium(III) acetyl acetonate, or chromium salts of mineral acids or saturated or unsaturated aliphatic carboxylic acids such as propanoic acid, hexanoic acid, octanoic acid, deconoic acid, lauric acid, myristic acid, palmitic acid, stearic acid, arachidic acid, oleic acid, erucic acid, linoleic and linolenic acid.

Suitable organometallic compounds are in particular aluminium trialkyls, magnesium dialkyls and magnesium alkoxy alkyls. The alkyl groups in the magnesium alkoxy alkyls and magnesium dialkyls preferably contain 2—12 carbon atoms, in particular 4—8 carbon atoms. Suitable organomagnesium compounds are diethyl magnesium, ethylbutyl magnesium, dipropyl · magnesium, diisopropyl magnesium, dibutyl- or diisobutyl magnesium, butoxybutyl magnesium, diamyl magnesium, dihexyl magnesium, dioctyl magnesium, didecyl magnesium, didodecyl magnesium but also dicycloalkyl magnesium with identical of different cycloalkyl groups with 3—12 carbon atoms, preferably 5 or 6 carbon atoms. Also, an alkyl and a cycloalkyl group may be bonded to magnesium.

Although alkyl or cycloalkyl magnesium compounds are preferred, magnesium aryls may also be used, notably diphenyl magnesium, as well as ditolyl and dixylyl magnesium.

The diaryl magnesium compounds are insoluble, or poorly soluble, in aliphatic hydrocarbons and, for that reason, are dissolved in aromatic hydrocarbons. The organomagnesium compounds may be prepared in a known manner (see e.g. Organometallic Compounds; Vol. 1; G. E. Coates; M. L. H. Green and K. Wade; Organometallverbindungen; F. Runge). In particular, use is made of solutions of magnesium alkyls prepared according to the process described in Dutch Patent No. 139.981.

Suitable aluminium compounds are aluminium trialkyls and organo aluminium compounds having the general formula $(R_4)_2AlH$, where $R_4$ denotes an alkyl group having 1—10 carbon atoms. Aluminium compounds containing one or more radicals derived from a diene, as known from for instance, German Auslegeschriften Nos. 1,956,353; 1,183,084; 1,136,113 and 1,186,633, may also be employed.

The chromium compounds are reacted with an organmagnesium or organoaluminium compound or an organometallic compound of another metal from group II or III in a solvent which is inert relative to these compounds. Preferably, this reaction is carried out in a hydrocarbon solvent, more in particular in one or more linear or branched aliphatic hydrocarbons such as butane, pentane, hexane, heptane, octane, decane, or the branched isomers, or in a low-boiling gasoline consisting mainly of hexanes and/or heptanes, or a higher boiling gasoline. Also higher linear or branched saturated aliphatic hydrocarbons or mixtures thereof can be used as a solvent. Although a number of chromium compounds dissolve more readily in aromatic hydrocarbons then in aliphatic hydrocarbons, and can be reacted with magnesium diaryls that are soluble in aromatic hydrocarbons, there is a general tendency not to use aromatic hydrocarbon solvents if adequate realizations of the process in aliphatic and/or cycloaliphatic solvents are available, in view of the high cost of aromatic hydrocarbon solvents and also because of the possible dangers to health.

Most chromium compounds will in part be dispersed in aliphatic and/or cycloaliphatic hydrocarbons on account of their low solubility. However, upon addition of an organomagnesium or organoaluminium compound these compounds will at least in part dissolve. Dissolution is promoted by gentle heating e.g. at temperatures of 40—100°C or, if low-boiling solvents are used, to the boiling point of the solvent (under pressure, if desired). The compounds slightly colour the hydrocarbon solvent because a small part of them dissolves. Addition of the organomagnesium or organoaluminium compound yields dark-coloured solutions.

The molar ratio of the organometallic compound concerned to the chromium compounds used, expressed as the atomic ratio of the metal of group II or III to the chromium, is chosen between 0.5:1 and 20:1, preferably between 1:1 and 6:1.

In order to bring the vanadium compound into solution, this compound can be complexed with organometallic compounds in the way described above for chromium compounds, or use can be made of compounds which are as such soluble in the solvent used for depositing the compound on the inert support.

Suitable vanadium compounds are, for example, vanadyl chloride, and preferably vanadyl esters having the formula $VO(OR)_3$, which dissolve readily in hydrocarbons, as described in, notably, Chemiker Zeitung 15, 15 Aug. 1970, pp. 547—555.

Besides the chromium and vanadium compounds essential for the catalyst of the invention, also other transition metals such as, for example, titanium can be applied to the inert support as complexes or compounds soluble in the solvents used.

The solutions of the chromium complex, of the vanadium compound or complex, and of the optional compounds or complexes of other transition metals can be combined with the inert inorganic support separately, in any desired sequence, or jointly.

If a vanadium complex and/or complexes of other transition metals are used, they are preferably reacted with 0,5—20 moles of organometallic compound per mole of vanadium. They can also be prepared together with the chromium complex, if desired.

The chromium and vanadium solutions are combined with the inert support by for instance adding the solution slowly and with stirring to a support suspended in the solvent. The complexes and compounds can be deposited on the support by vaporation, insofar as they do not wholly or in part deposit direct from the solution onto the support. When the complexes and compounds deposit on the support from the solution, this is clearly perceptible because the solution loses all or part of its colour and the support is coloured.

The inert inorganic support is preferably an oxide, such as silica, alumina, mixed alumina-silica, zirconium oxide, thorium oxide, magnesium oxide. Among these oxides, silica, alumina and mixed silica-alumina are prefered, and silica is most preferred. Silica is known, and can be used, in many different forms. Particularly suitable are silica xerogels with large pore volumes. If desired, during or after preparation of the silica can in a known manner be provided with other components such as fluorine or titanium. Alternatively, these compounds can be applied after the activation of the catalyst.

The support is dried, insofar as this is necessary, by for instance heating in dry air, before the transition metal compounds are deposited on it. Drying should be effected so that the support is preferably free of physically bound water.

The amount of chromium, vanadium and optional other transition metals applied to the support may vary within wide limits but will generally be 0.01—10% by wt. of transition metal on the support.

The molar ratio of the chromium applied to the inert support to the vanadium applied to the support may vary within wide limits. Generally, the ratio chromium:vanadium will be chosen between 1:50 and 50:1, in particular between 1:20 and 20:1.

After the chromium complex, the vanadium compound or complex and the optional compounds or complexes of other transition metals have been combined with the support, support and metal compounds are separated from the solvent by filtration or evaporation. If the complexes and/or compounds of the transition metals are not deposited on the support to a considerable extent, in which case the solvent will retain all or substantially all of its colour, the solvent will be evaporated.

The support with the transition metals deposited on it can next be activated by heating it at a temperature of 200—1200°C in a non-reducing atmosphere, such as oxygen, air, nitrogen, carbon dioxide, or a noble gas. Preferably, this heating step is carried out in an oxidizing atmosphere, such as for instance oxygen, oxygen-containing gases or air, of course also air of reduced or increased oxygen content forming an oxidizing atmosphere and being usable.

Preferably, the supported metal compounds are heated at 400—1200°C, more in particular at 500—1100°C.

The heating times may vary in duration from a few seconds to tens of hours or more. At temperatures in the range of 500—1100°C, the heating time may generally be 30 minutes to 8 hours.

The optimum heating period can easily be determined experimentally by one skilled in the art, by preparing catalysts of identical composition under conditions which are identical except for the heating periods, which are varied at a given temperature, and by subsequently determining the polymerization properties of the ultimate catalyst.

By preference, after cooling to ambient temperature the supported catalyst is introduced into a hydrocarbon solvent, which is preferably the polymerization medium. Solvents can be aliphatic or cyclic hydrocarbons, such as butane, isobutane, normal or branched pentanes, hexanes, heptanes, octanes and higher linear and/or branched saturated aliphatic hydrocarbons, cyclopentane, cyclohexane, cycloheptane, cyclooctane etc. and mixtures, in particular fractions obtained directly or indirectly from mineral oil, such as low-boiling gasoline, kerosine or gas oil, which indeed may contain aromatics but preponderantly consist of aliphatics and/or cycloaliphatics. Aromatic hydrocarbons, such as benzene, toluene, xylenes or halogenated hydrocarbons can also be used but for practical reasons, viz. on account of cost and health risk, it is usually preferred to use aliphatic hydrocarbons or mineral oil fractions which contain little or no aromatics.

To the supported catalyst dispersed in an inert dispersant, an organometallic compound of an element of group II or III of the periodic system, such as beryllium, magnesium, boron, aluminium or gallium, may be added. The molar ratio of the organo metallic compound to the transition metals applied to the support can then vary within wide limits, for instance between 0.1:1 and 200:1. Preferably, the ratios lie between 1:1 and 40:1.

To what extent the addition of such organometallic compounds is desirable depends on the polymerization conditions and on the polymer desired. At low catalyst concentrations and at relatively low monomer concentrations in the dispersant, the polymerization can often be started and sustained if such organometallic compounds are added. The contaminants level in monomer and dispersant also plays a role. By experiment it can easily be established whether addition of said organometallic compounds is desirable. By addition of organometallic compounds it is also possible to modify the properties of the polyethylene to be prepared.

The suspension polymerizations with the catalysts of the invention are generally carried out at temperatures of at most 100°C. In some volatile solvents, such as, for instance, isobutane, the suspension polymerization can be carried out at even slightly higher temperatures to about 110°C. Preferably, however, polymerization is carried out at temperatures of 105°C at most. The polymerisation can be carried out at about 50°C, but preferably temperatures of at least 70°C, in particular 85°C or higher, are chosen.

With the catalyst of the invention polymerization of 1-alkenes with 2—8 carbon atoms, whether or not together with minor amounts of at most 15 mole % of one or more 1-alkenes with 2—15 carbon atoms, preferably ethylene, if desired with at most 10 mole % of olefins with 3—8 carbon atoms, can be effected. The reactivity of ethylene is higher than that of 1-alkenes. Therefore, in order to copolymerize ethylene with a particular mole percentage of 1-alkene, there will have to be more, sometimes even considerably more, of that 1-alkene in the reaction mixture. One of ordinary skill in the art is familiar with this and will not have much trouble in establishing the required proportions.

Ethylene copolymerizations with the catalysts of the invention can be performed also at temperatures above 120°C, for example ·150—200°C. A solution of ethylene polymer in the solvent is then obtained, which can be worked up in a known manner. The polymerization can also be carried out as a so-called gas-phase polymerization, realizations of which are known from, for instance, UK Patent Specification No. 1,373,982.

The polymerization can be carried out at atmospheric pressure, but also at elevated pressure. If low-boiling dispersants are used, such as for instance butane, isobutane, pentane, the pressure in the reactor will have to be higher than atmospheric. The monomer pressure can be atmospheric but is preferably higher. By carrying out the polymerization at elevated monomer pressure, higher yields can be obtained, so that elevated pressures up to for instance 10 MPa will normally be used. Higher pressures, even up to 200 MPa or more, are possible but are usually not employed on account of practical considerations.

Preferably, polymerization is carried out at pressures between 600 and 8000 kPa, in particular between 1200 and 5000 kPa. The pressure to be chosen will in part depend on the polymerization temperature and the volatility of the dispersant.

The monomer pressure will be determined, in part, by balancing, on the one hand, the cost and safety aspects of an installation for relatively high pressures, as compared with the cost and safety aspects of an installation for relatively low pressures, and, on the other hand, the polyethylene productivity under high and low pressures, respectively. The factors determining the final choice of monomer pressure are mainly economic.

The quantity of catalyst is generally so chosen that the dispersant contains 0.001 to 10 mmoles of transition metals per litre of dispersant, and preferably 0.001 to 0.1 mmoles/l.

The present process lends itself to known modifications. For example, the molecular weight may be controlled not only through the temperature but also by addition of hydrogen or other modifying agents commonly used.

The invention will be further explained by the following examples but is not restricted to them.

Example 1
Preparation of a chromium and vanadium containing catalyst, starting from a vanadyl isopropylate complex and from a chromium acetyl acetate complex.

A. Conditioning of the silica material:
50 grams of silica support (EP-10/Messrs. Corsfield) is dried for 4 hours at 200°C, dry air being passed into it.

After replacement of the air by nitrogen the silica support is suspended in approx. 250 ml dried gasoline in a 1 litre flask.

B. Application of vanadium.
In a 100 ml flask filled with 50 ml dry gasoline, 1.24 ml vanadyl isopropylate (3.95 m) is dissolved. With stirring, 3.7 ml 3.97 M triisobutyl aluminium (TIBA) is added, yielding a strongy coloured dark brown solution. With stirring, this solution is slowly trickled into the suspension of the silica support, as described above. After 1 hour of stirring, the silica support is strongly coloured, whereas the supernatant liquid is colourless, which indicates that the vanadium has deposited on the support.

C. Application of the chromium.

In 50 ml dry gasoline in a 100 ml flask, 1.68 gram (0.0048 moles) of chromium acetyl acetonate is suspended. Next, at reflux temperature, with stirring, 3.64 ml (0.0144 moles) TIBA is slowly added dropwise. The substances are allowed to react for 1 hour, after which all of the chromium acetyl acetonate has been converted and a dark brown solution results. Finally, this solution is slowly added, with stirring, to the suspension of the vanadium-containing silica support of Example 2b. After 1 hour of stirring, the supernatant liquid is colourless, which indicates that also the chromium has completely deposited on the support. The excess gasoline is separated out by distillation. The dry silica now contains 0.5% by wt. of V and 0.5% by wt. of Cr. By heating for 8 hours at 900°C in a stream of dry air, the catalyst is activated.

Example II
A. Application of vanadium.

0.85 g vanadium acetyl acetonate is suspended in 50 ml dry gasoline in a 140 ml flask. With stirring, 1.85 ml 3.97 M TIBA is slowly added to this solution. The substances are allowed to react for 1 hour at reflux temperature, after which period all of the vanadium acetyl acetonate has been converted and a dark brown solution has been formed. With stirring, this solution is slowly trickled to a suspension of a one hour of stirring, the silica support is strongly coloured, whereas the supernatant liquid is colourless, indicating that the vanadium has deposited on the support.

B. Application of the chromium.

0.88 g chromium(II) acetate is suspended in 50 ml dry gasoline in a 100 ml flask. Next, with stirring, at reflux temperature, 11.7 ml 3.97 M TIBA is slowly added dropwise. The substances are allowed to react for 1 hour, after which period the chromium(II) acetate has been fully converted and a dark brown solution results. This solution is finally added slowly, with stirring, to the suspension of the vanadium-containing silica support obtained in accordance with A. After 1 hour of stirring, the supernatant liquid is colourless, which indicates that also the chromium has deposited completely on the support. The excess gasoline is separated out by distillation. The dry silica contains 0.25% by wt. of V and 0.30 by wt. of Cr. By heating for 8 hours at 900°C under dry air, the catalyst is activated.

Example III
Polymerization of ethylene.

Into a stirred autoclave (5 litres), 1.2 kg dry isobutane is introduced. After the contents of the reactor have been brought to a temperature of 97°C, hydrogen at 2.5 bar is forced in, and next ethylene, until the total pressure is 28 bar. Next, 530 mg of the catalyst described in Example I is added. Polymerization is carried out for 120 minutes, the total pressure in the reactor being maintained at a constant value by forcing in ethylene. The contents of the reaction vessel are kept at 97°C during the polymerization. The polyethylene yield is 1510 grams per gram of catalyst. The melt flow index (5 kg) of the product is 0.08 g/10 minutes.

**Claims**

1. Process for the preparation of a supported chromium oxide type of catalyst that, upon heating in a non-reducing atmosphere at a temperature of between 200—1200°C is able to polymerize olefins, by bringing a complex of a chromium compound and one or more organometallic compounds of a metal of group II or III of the periodic system, in which hydrocarbyl groups with 1—20 carbon atoms are bonded to this metal, on an inorganic support, characterized in that besides the chromium complex also a vanadium compound or a complex of a vanadium compound with one or more organometallic compounds of a metal of group II or III of the periodic system is deposited on the inert support in such an amount that 0,5—20 moles of the organometallic compound(s) per mole of chromium + vanadium are present, provided that in case a complex of vanadium compound/organometallic compound is used, only the chromium or only the vanadium compound is a 1,3-diketocompound.

2. Process according to claim 1, characterized in that said vanadium compound or complex is deposited on the inert support together with or separately from the chromium complex, from a solution of said compound or complex.

3. Process according to claims 1—2, characterized in that use is made of a complex of a vanadium compound with one or more organometallic compounds of a metal of group II or III of the periodic system in which hydrocarbyl groups with 1—20 carbon atoms are bonded to this metal.

4. Process according to claim 3, characterized in that the vanadium compound is reacted with 0,5—20 moles of organometallic compound per mole of vanadium.

5. Process according to claims 1—2, characterized in that a vanadium compound is used which is soluble in an organic solvent which is inert with respect to the support.

6. Process according to claims 1—5, characterized in that the molar ratio of the chromium to the vanadium is 1:50 to 50:1.

7. Process according to claim 6, characterized in that the molar ratio of the chromium to the vanadium is 1:20 to 20:1.

8. Process for the polymerization of a 1-alkene with 2—8 carbon atoms, whether or not together with minor amounts of at most 15 mole % of one or more 1-alkenes with 2—15 carbon atoms, preferably ethylene, if desired with at most 10 mole % of olefins with 3—8 carbon atoms, in the presence of a catalyst obtained by applying to an inert inorganic support, in particular silica, a complex of a chromium compound with one or more organometallic compounds of a metal of group II or III of the periodic system in which hydrocarbyl groups of 1—20 carbon atoms are bonded to this metal, and heating the whole in a nonreducing atmosphere at a temperature of 200—1200°C, the process being characterized in that a catalyst prepared according to claims 1—7 is used.

9. Process according to claim 8, characterized in that the polymerization is carried out also in the presence of an organometallic compound of a metal of group II or III of the periodic system.

10. Process according to claim 9, characterized in that a trialkyl boron is used as organometallic compound.

**Patentansprüche**

1. Verfahren zur Herstellung eines Katalysators auf Träger vom Chromoxidtyp, der bei Erhitzen in einer nicht-reduzierenden Atmosphäre bei einer Temperatur zwischen 200 und 1200°C imstande ist, Olefine zu polymerisieren, indem ein Komplex einer Chromverbindung und einer oder mehrerer Organometallverbindungen eines Metalls der Gruppe II oder III des Periodischen Systems, in dem Hydrocarbylgruppen mit 1 bis 20 Kohlenstoffatomen an dieses Metall gebunden sind, auf einen anorganischen Träger aufgebracht wird, dadurch gekennzeichnet, daß außer dem Chromkomplex auch eine Vanadiumverbundung oder ein Komplex einer Vanadiumverbindung mit einer oder mehreren Organometallverbindungen eines Metalls der Gruppe II oder III der Periodischen Systems auf dem inerten Träger in einem solchen Anteil abgelagert wird, daß 0,5 bis 20 Mol der Organometallverbindung(en) pro Mol Chrom + Vanadium vorhanden sind, vorausgesetzt, daß, wenn ein Komplex von Vanadiumverbindung/Organometallverbindung verwendet wird, nur die Chrom- oder nur die Vanadiumverbindung eine 1,3-Diketoverbindung ist.

2. Verfahren nach Anspruch 1, dadurch gekennzeichnet, daß die Vanadiumverbindung oder der Vanadiumkomplex zusammen mit oder getrennt von dem Chromkomplex aus einer Lösung dieser Verbindung oder dieses Komplexes auf dem inerten Träger abgelagert wird.

3. Verfahren nach den Ansprüchen 1 bis 2, dadurch gekennzeichnet, daß ein Komplex einer Vanadiumverbindung mit einer oder mehreren Organometallverbindungen eines Metalls der Gruppe II oder III des Periodischen Systems, in dem Hydrocarbylgruppen mit 1 bis 20 Kohlenstoffatomen an dieses Metall gebunden sind, verwendet wird.

4. Verfahren nach Anspruch 3, dadurch gekennzeichnet, daß die Vanadiumverbindung mit 0,5 bis 20 Mol Organometallverbindung pro Mol Vanadium umgesetzt wird.

5. Verfahren nach den Ansprüchen 1 bis 2, dadurch gekennzeichnet, daß eine Vanadiumverbindung verwendet wird, die in einem organischen Lösungsmittel löslich ist, welches in bezug auf den Träger inert ist.

6. Verfahren nach den Ansprüchen 1 bis 5, dadurch gekennzeichnet, daß das Molverhältnis des Chrom zum Vanadium 1:50 bis 50:1 beträgt.

7. Verfahren nach Anspruch 6, dadurch gekennzeichnet, daß das Molverhältnis des Chroms zum Vanadium 1:20 bis 20:1 beträgt.

8. Verfahren zur Polymerization eines 1-Alkens mit 2 bis 8 Kohlenstoffatomen, gegebenenfalls zusammen mit geringeren Anteilen von höchstens 15 Mol% eines oder mehrerer 1-Alkene mit 2 bis 15 Kohlenstoffatomen, vorzugsweise Äthylen, wenn gewünscht mit höchstens 10 Mol% Olefinen mit 3 bis 8 Kohlenstoffatomen, in Anwesenheit eines Katalysators, erhalten durch Aufbringen eines Komplexes einer Chromverbindung mit einer oder mehreren Organometallverbindungen eines Metalls der Gruppe II oder III des Periodischen Systems, worin Hydrocarbylgruppen mit 1 bis 20 Kohlenstoffatomen an dieses Metall gebunden, sind, auf einen inerten anorganischen Träger, insbesondere Siliziumdioxid, und Erhitzen des ganzen in einer nicht-reduzierenden Atmosphäre auf eine Temperatur von 200 bis 1200°C, welches Verfahren dadurch gekennzeichnet ist, daß ein nach den Ansprüchen 1 bis 7 hergestellter Katalysator verwendet wird.

9. Verfahren nach Anspruch 8, dadurch gekennzeichnet, daß die Polymerisation auch in Anwesenheit einer Organometallverbindung eines Metalls der Gruppe II oder III des Periodischen Systems durchgeführt wird.

10. Verfahren nach Anspruch 9, dadurch gekennzeichnet, daß ein Trialkylbor als Organometallverbindung verwendet wird.

**Revendications**

1. Procédé de préparation d'un catalyseur du type oxyde de chrome sur un support qui, lors d'un chauffage dans une atmosphère non réductrice à une température comprise entre 200 et 1200°C est capable de polymériser des oléfines, consistant à amener sur un support inorganique un complexe d'un composé de chrome et d'un ou plusieurs composés organométalliques d'un métal du Groupe II ou III de la Classification Périodique, dans lequel des groupes hydrocarbyle de 1 à 20 atomes de carbone sont liés à ce métal, caractérisé en ce qu'outre le complexe de chrome, ou dépose sur le support inerte un composé de vanadium ou un complexe d'un composé de vanadium avec un ou plusieurs composés organométalliques d'un métal du Groupe II ou III de la Classification Périodique, en une quantité telle que 0,5 à 20 moles du ou des composés organométalliques par mole de chrome + vanadium sont présentes, à la condition que dans le cas d'un complexe de composé de vanadium et d'un composé organométallique, seul le composé de chrome ou seul le composé de vanadium est un composé 1,3-dicéto.

2. Procédé selon la revendication 1, caractérisé en ce qu'on dépose ledit composé ou complexe de vanadium sur le support inerte conjointement ou séparément du complexe de chrome à partir d'une solution dudit composé ou complexe.

EP 0 072 075 B1

3. Procédé selon les revendications 1 à 2, caractérisé en ce qu'on utilise un complexe d'un composé de vanadium avec un ou plusieurs composés organométalliques d'un métal du Groupe II ou III de la Classification Périodique dans lesquels des groupes hydrocarbyle de 1 à 20 atomes de carbone sont liés à ce métal.

4. Procédé selon la revendication 3, caractérisé en ce qu'on fait réagir le composé de vanadium avec 0,5 à 20 moles du composé organométallique par mole de vanadium.

5. Procédé selon les revendications 1 à 2, caractérisé en ce qu'on utilise un composé de vanadium qui est soluble dans un solvant organique inerte vis à vis du support.

6. Procédé selon les revendications 1 à 5, caractérisé en ce que le rapport molaire du chrome au vanadium est compris entre 1:50 et 50:1.

7. Procédé selon la revendication 6, caractérisé en ce que le rapport du chrome au vanadium est compris entre 1:20 et 20:1.

8. Procédé de polymérisation d'un alcène-1 de 2 à 8 atomes de carbone, content facultativement des faibles proportions ne dépassant pas 15 moles% d'un ou plusieurs alcènes-1 de 2 à 15 atomes de carbone, de préférence de l'éthylène, avec éventuellement un maximum de 10 moles% d'oléfines contenant de 3 à 8 atomes de carbone, en présence d'un catalyseur qu'on obtient en appliquant sur un support inorganique inerte, en particulier silice un complexe d'un composé de chrome avec un ou plusieurs composés organométalliques d'un métal du Groupe II ou III de la Classification Périodique, dans lequel des groupes hydrocarbyle de 1 à 20 atomes de carbone sont liés à ce métal, et en chauffant l'ensemble en atmosphère non réductrice à une température de 200 à 1200°C, le procédé étant caractérisé en ce qu'on utilise un catalyseur préparé selon les revendications 1 à 7.

9. Procédé selon la revendications 8, caractérisé en ce qu'on effectue la polymérisation également en présence d'un composé organométallique d'un métal du Groupe II ou III de la Classification Périodique.

10. Procédé selon la revendication 9, caractérisé en ce qu'on utilise un trialkyl-bore en qualité de composé organométallique.

8